# EUROPÄISCHE PATENTSCHRIFT

(11) **EP 3 604 709 B1**
(45) Veröffentlichungstag und Bekanntmachung des Hinweises auf die Patenterteilung: **19.02.2025**
(21) Anmeldenummer: 19186764.7
(22) Anmeldetag: 17.07.2019
(51) Int. Cl.: E04G 15/06, F16L 5/14, H02G 3/22

(54) **VERWENDUNG EINER DURCHFÜHRUNG ZUM EINGIESSEN IN EIN BODENELEMENT**
USE OF A FEEDTHROUGH FOR CASTING INTO A WALL ELEMENT
UTILISATION D'UNE TRAVERSÉE POUR COULER DANS UN ÉLÉMENT DE SOL

(30) Priorität: 18.07.2018 DE 102018005720; 18.07.2018 DE 102018005719; 18.07.2018 DE 102018005718; 18.07.2018 DE 102018005717
(43) Veröffentlichungstag der Anmeldung: 05.02.2020
(60) Teilanmeldung: 25152068.0
(73) Patentinhaber: Hauff-Technik GmbH & Co. KG, 89568 Hermaringen (DE)
(72) Erfinder: KURZ, Ralf, 89537 Giengen (DE); SCHEURING, Horst, 89542 Herbrechtingen (DE); SCHMID, Jörg, 89129 Langenau (DE)
(74) Vertreter: König Szynka Tilmann von Renesse Patentanwälte Partnerschaft mbB München

(56) Entgegenhaltungen:
- EP-A1- 3 288 130
- DE-A1- 102005 041 176
- DE-U1- 202012 009 132
- DE-U1- 202013 007 621
- US-A1- 2016 090 738

## Beschreibung

Die vorliegende Erfindung betrifft die Verwendung einer Durchführung zum Eingießen in ein Bodenelement und Hindurchführen einer Leitung.

Die in Rede stehende Durchführung kann als Gebäudeeinführung genutzt werden, um im Falle eines kellerlosen Gebäudes die Leitung durch dessen Bodenplatte hindurch in das Gebäude hinein zu verlegen. Die Durchführung wird zunächst auf der Baustelle positioniert und bspw. anhand eines Schnurgerüsts ausgerichtet. Beim Gießen der Bodenplatte wird sie in diese eingegossen und hält einen Durchtritt für die Leitung bzw. Leitungen frei.

Aus der DE 10 2005 041 176 A1 ist eine Durchführung mit einem Kasten bekannt, der in eine Bodenplatte eingegossen wird. Der Kasten ist aus mehreren aufeinandergesetzten Rahmenteilen aufgebaut.

Auch aus der DE 20 2013 007 621 U1 ist eine Durchführung mit einem aus Rahmenteilen aufgebauten Kasten bekannt. Dabei sind diese Rahmenteile miteinander verklipst, also formschlüssig zusammengehalten.

Die EP 3 288 130 A1 zeigt eine Gebäudeeinführung zum Einbau in eine Außenwand eines Gebäudes, wobei an ein Unterteilungselement mit mehreren Durchlassöffnungen jeweils ein Leerrohr in Verlängerung angesetzt wird.

Der in der US 2016/0090738 A1 offenbarte Körper wird als Rohrfixierung in ein Decken- oder Wandelement innerhalb eines Gebäudes eingegossen.

Aus der DE 20 2012 009 132 U1 ist ein Ansetzstück bekannt, welches an eine Leitung angesetzt wird und in dessen Hohlraum die Leitung schräg gezogen werden kann.

Der vorliegenden Erfindung liegt das technische Problem zugrunde, eine besonders vorteilhafte Durchführung als Gegenstand einer solchen Verwendung anzugeben.

Dies wird erfindungsgemäß mit den Merkmalen gemäß Anspruch 1 gelöst. Die Durchführung weist ein Mantelrohr und einen Vergusskörper auf, Letzterer ist aus einem geschäumten Kunststoffmaterial vorgesehen. Dieses ist aufgrund seiner Beschaffenheit einer mechanischen Bearbeitung, bspw. einem Schneiden, durch einen Monteur auf der Baustelle zugänglich (das Schaummaterial hat eine zellige Struktur und niedrigere Dichte als das zugrundeliegende Kunststoffmaterial für sich). Der Vergusskörper wird nun solchermaßen in das Bodenelement eingegossen, dass er bezogen auf eine Oberkante des Bodenelements übersteht, also nach oben herausragt. Das Mantelrohr erstreckt sich unterhalb im Bodenelement bzw. Erdreich, der Vergusskörper hält einen Bereich oberhalb bzw. am oberen Ende des Mantelrohres frei von dem Vergussmaterial des Bodenelements. Das Mantelrohr kann nach oben in den Vergusskörper hineinragen oder sich im Gesamten unterhalb davon erstrecken.

Nach dem Gießen des Bodenelements wird dann ein oberer Abschnitt des Vergusskörpers entfernt und ein Montageaufsatz in einer Montageposition relativ zum Mantelrohr positioniert. Da der obere Abschnitt entfernt wird, was aufgrund des geschäumten Kunststoffmaterials ohne übermäßigen Kraft- oder Werkzeugaufwand möglich ist, kann der Montageaufsatz relativ nah an bzw. bündig mit der Oberkante des Bodenelements positioniert werden. Dies kann bei einer Gebäudeeinführung, wenn es in dem Gebäude zu einem Brand kommt, ein Durchschlagen auf z. B. die Gasleitung soweit möglich verzögern bzw. verhindern. Mit einem in seiner Montageposition im Wesentlichen bodenbündigen Montageaufsatz kann das darunterliegende Mantelrohr ein Stück weit zum Gebäudeinneren hin abgeschirmt werden. Würde zum Vergleich der obere Abschnitt des Vergusskörpers nicht entfernt, könnte das überstehende Schaumstoffmaterial im Brandfall vergleichsweise schnell abschmelzen und damit einen "Kanal" zu der Gasleitung freigeben.

Ein Rohrstutzen des Montageaufsatzes sitzt in der Montageposition auf oder in dem Mantelrohr, er verlängert das Mantelrohr nach oben hin. Durch den Rohrstutzen und das Mantelrohr kann dann die eigentliche Leitung verlegt werden.

Bevorzugte Ausgestaltungen finden sich in den abhängigen Ansprüchen und der gesamten Offenbarung, wobei bei der Darstellung der Merkmale nicht immer im Einzelnen zwischen Verfahrens- bzw. Verwendungs- oder auch Vorrichtungsaspekten unterschieden wird; jedenfalls implizit ist die Offenbarung hinsichtlich sämtlicher Anspruchskategorien zu lesen. Soweit bspw. eine Verwendung der Durchführung geschildert wird, ist dies stets auch als Offenbarung einer Durchführung zu lesen, die für eine entsprechende Verwendung ausgelegt ist.

Die geschilderten Vorteile können bereits zum Tragen kommen, wenn nur eine einzige Leitung durch die Durchführung geführt wird. Bei dieser Leitung könnte es sich bspw. um eine Gasleitung handeln, das geschilderte Problem des "Durchschlagens" kann sich jedoch auch im Falle einer anderen Sparte (z. B. Elektro bzw. Daten) ergeben, es kann nämlich bspw. aufgrund eines Störfalls bzw. Schadens gebäudeaußenseitig Schleichgas in dem Mantelrohr dieser Sparte anstehen. Bevorzugt ist die Durchführung zum Hindurchführen mehreren Leitungen ausgelegt, wozu sie weiter bevorzugt mehrere Mantelrohre aufweist (siehe unten im Detail). Diese können dann für die einzelnen Sparten (Wasser, Gas, Elektro bzw. Daten etc.) genutzt werden.

Das Überstehen des eingegossenen Vergusskörpers bezieht sich auf die vertikale Richtung, ein oberes Ende des Vergusskörpers kann bspw. um in der Reihenfolge der Nennung zunehmend bevorzugt mindestens 5 cm, 10 cm bzw. 15 cm gegenüber der Oberkante des Bodenelements überstehen. Die Oberkante liegt an der Oberfläche des Bodenelements. Prinzipiell könnte der Vergusskörper vor dem Ablängen beliebig weit überstehen, mit Blick auf die Handhabbarkeit können jedoch Obergrenzen bspw. bei höchstens 80 cm, 60 cm bzw. 50 cm liegen.

Der Montageaufsatz kann bevorzugt eine Flanschplatte, also einen nach außen hervortretenden Flansch aufweisen, besonders bevorzugt einen vollständig umlaufenden Flansch, der in der Montageposition einen seitlichen Überlapp mit der Oberfläche des Fußbodenaufbaus hat (eine vertikale Projektion des Flansches liegt zumindest teilweise in der Oberfläche des Fußbodenaufbaus); bevorzugt sitzt der Flansch auf der Oberfläche des Fußbodenaufbaus auf. Die Flanschplatte ist bevorzugt aus Kunststoff vorgesehen, insbesondere faserverstärktem Kunststoff, etwa glasfaserverstärktem Polyamid. Der Montageaufsatz kann dann insbesondere auch als Auszugssicherung dienen, also die Leitung axial in Position halten (gegen eine nach unten bzw. zum Gebäudeäußeren hin gerichtete Kraft), wenn die Leitung bspw. bei späteren Erdarbeiten mit einer Baggerschaufel Zug beansprucht wird (der Bagger in den Leitungsstrang greift).

In der Flanschplatte ist bevorzugt eine Durchgangsöffnung vorgesehen, durch welche sich dann die montierte Leitung ins Gebäudeinnere erstreckt. Nach unten fluchtet die Durchgangsöffnung mit dem Rohrstutzen. Die Leitung ist dann bevorzugt mit einem Dichtelement, bspw. aus einem Elastomermaterial, gegen den Montageaufsatz gedichtet. Damit besteht dann idealerweise keine fluidische Verbindung zwischen dem Inneren des Mantelrohres und dem Gebäudeinneren, kann auf diesem Weg als bspw. kein Gas bzw. Schleichgas ins Gebäudeinnere gelangen. Generell dient das Mantelrohr als Umhüllung bzw. Leerrohr für die eigentliche Leitung, die in der Regel erst nach dem Gießen der Bodenplatte bzw. Erstellen des Fußbodenaufbaus verlegt wird. Das Mantelrohr bildet bzw. ist Teil eines Schutzrohrsystems, das sich vom Gebäude bis bspw. zu einer straßenseitigen Anschlussstelle (Versorgungsleitung) erstreckt.

Dieses Schutzrohrsystem wird dann zumindest in Teilen, bevorzugt insgesamt (bis zur Anschlussstelle), bereits vor dem Gießen des Bodenelements verlegt, beim Gießen des Bodenelements kann der Graben dann bevorzugt bereits wieder aufgefüllt sein (auch zwischen Gebäude und Anschlussstelle). Die eigentliche Leitung, also bspw. ein Rohr (Gas, Wasser bzw. Fernwärme) oder ein Kabel (Elektro bzw. Daten) kann dann nachträglich verlegt werden, nämlich vom Gebäudeinneren oder von der Anschlussstelle her durch das Schutzrohrsystem eingeschoben werden. Dann kann die bereits erwähnte Dichtung zwischen Leitung und Montageaufsatz hergestellt werden.

Die Angaben "oben"/"unten" beziehen sich auf die vertikale Richtung, also auf die Situation, in der die Durchführung montiert wird. Angaben wie "seitlich" bzw. auch "innen"/"außen" betreffen ohne ausdrücklich gegenteilige Angabe die zu einer vertikalen Achse der Durchführung senkrechten, davon weg weisenden Richtungen (diese liegen horizontal).

Das Ablängen des Vergusskörpers nach dem Eingießen spiegelt wider, dass beim Gießen der Bodenplatte in der Regel noch nicht die Höhe des später darauf erstellten Fußbodenaufbaus bekannt ist. Das Mantelrohr lässt sich also nicht bereits vor dem Gießen der Bodenplatte auf einer solchen Höhe platzieren, dass es dann bündig mit der Oberfläche des Fertigfußbodens liegt. Der Vergusskörper schafft eine gewisse Anpassbarkeit an unterschiedliche Höhen. Das geschäumte Kunststoffmaterial kann sich hierbei nicht nur gut ablängen lassen, es kann bspw. auch kostengünstiger herzustellen sein als ein Hartkunststoffteil, insbesondere Spritzgußteil. Vorteilhaft kann auch eine integrale, für sich einstückige Ausgestaltung des Vergusskörpers sein, sodass weder bei der Herstellung noch bei der Höhenanpassung eine übermäßige Zahl an Einzelteilen zusammengesetzt bzw. auseinandergenommen werden muss. Der Vergusskörper muss bei der Höhenanpassung nicht in Einzelteile zerlegt, sondern kann vergleichsweise einfach abgelängt werden.

Das geschäumte Kunststoffmaterial ist in bevorzugter Ausgestaltung Polypropylen, bevorzugt expandiertes Polypropylen. Dieses kann einen guten Kompromiss zwischen Abtrennbarkeit einerseits und hinreichend Stabilität beim Vergießen andererseits bieten. Im Allgemeinen wäre bspw. auch expandiertes Polystyrol denkbar. Generell kann das geschäumte Kunststoffmaterial bspw. eine Rohdichte (auch geometrische Dichte bzw. Raumgewicht genannt) von höchstens 300 kg/m³, 200 kg/m³, 150 kg/m³ bzw. 100 kg/m³ haben, mit möglichen (davon unabhängigen) Untergrenzen bei z. B. mindestens 15 kg/m³, 20 kg/m³ bzw. 25 kg/m³.

In bevorzugter Ausgestaltung verdeckt der Vergusskörper für sich das Mantelrohr nach oben hin, bevor der obere Abschnitt des Vergusskörpers entfernt wird. Der Vergusskörper bildet also in anderen Worten einen Deckel, der mit dem Entfernen des oberen Abschnitts entfernt wird. Alternativ könnte im Allgemeinen bspw. auch ein gesonderter Deckel vorgesehen und auf den Vergusskörper gesetzt sein, bspw. aufgeklebt. Das Mantelrohr ist damit während der Rohbauphase zuverlässig und auch gut sichtbar (einfache optische Kontrolle) gegen ein Eindringen von Verschmutzungen geschützt.

Bei einer bevorzugten Ausführungsform werden das Mantelrohr und der Vergusskörper ohne den Montageaufsatz in dem Bodenelement vergossen, wird dieser also erst nachträglich angesetzt. Der Vergusskörper und das Mantelrohr bilden bzw. sind Teil eines Rohbauteils, dass beim Gießen des Bodenelements baulich integriert wird. Der Montageaufsatz wird dann erst nachträglich angesetzt, wenn das Vergussmaterial des Bodenelements gehärtet ist, typischerweise im Zuge der Leitungsverlegung. Zuvor wird der obere Abschnitt des Vergusskörpers entfernt.

Generell kann der Rohrstutzen (des Montageaufsatzes) im Zuge des "Ansetzens" an das Mantelrohr im Allgemeinen auch auf dieses aufgeschoben werden, bevorzugt ist das Ansetzen als ein Einschieben zu lesen (der eingeschobene Rohrstutzen kann sich in dem Mantelrohr vorteilhafterweise auch über den Grundkörper hinaus nach unten erstrecken).

Im Allgemeinen kann die Durchführung hingegen auch gemeinsam mit dem Montageaufsatz in das Bodenelement eingegossen werden. Der Montageaufsatz ist dabei schon an dem Vergusskörper angeordnet, allerdings noch nicht in der Montageposition. Er kann beim Vergießen oberhalb der Montageposition angeordnet sein und dann anschließend nach unten in die Montageposition versetzt werden. Speziell in diesem Zusammenhang ist auch denkbar, dass der obere Abschnitt des Vergusskörpers dann gar nicht gesondert abgetrennt bzw. -geschnitten wird, sondern das Entfernen gewissermaßen selbsttätig erfolgt, wenn der Montageaufsatz nach unten in die Montageposition versetzt wird. Insbesondere wenn der Vergusskörper als vergleichsweise dünnwandige Hülse, etwa aus expandiertem Polystyrol, vorgesehen ist, könnte der obere Abschnitt schlichtweg zerbrochen werden, wenn der Montageaufsatz nach unten versetzt wird. Vorzugsweise wird der obere Abschnitt auf der Baustelle jedoch in einem trennenden Verfahren separiert, insbesondere durch Schneiden, bspw. mit einem Messer.

Der Montageaufsatz weist einen nach unten gerichteten Rohrstutzen auf, der in der Montageposition an dem Mantelrohr der Durchführung sitzt. Prinzipiell ist hierbei auch ein auf das Mantelrohr aufgeschobener Rohrstutzen denkbar, bevorzugt ist der Rohrstutzen in der Montageposition in das Mantelrohr eingeschoben. Der Rohrstutzen und das Mantelrohr sind bevorzugt gegeneinander gedichtet, vorzugsweise mit einer am oberen Ende des Mantelrohres angeordneten Dichtung und/oder einer am unteren Ende des Rohrstutzens angeordneten Dichtung (bevorzugt mit beiden). Zum Gebäudeinneren wird dieser Kanal dann bevorzugt mit der vorstehend erwähnten Dichtung zwischen Montageaufsatz und Leitung verschlossen. Wird die entsprechende Sparte zunächst nicht belegt, kann der Kanal mit einem Blindverschluss verschlossen werden.

Bei einer bevorzugten Ausführungsform weist die Durchführung zusätzlich einen Grundkörper auf, auf dem der Vergusskörper aufsitzt, der also unterhalb des Vergusskörpers angeordnet ist. Der Grundkörper kann bspw. die Stabilität der Durchführung vor/bei dem Vergießen erhöhen bzw. auch einer Relativfixierung unterschiedlicher Bestandteile der Durchführung dienen. Sind bspw. mehrere Mantelrohre vorgesehen, kann der Grundkörper diese beisammenhalten. Im Allgemeinen ist auch ein metallischer Grundkörper denkbar, bevorzugt ist ein Kunststoffteil, insbesondere aus einem Hartkunststoff, insbesondere ein Spritzgussteil. Der Verguss- und der Grundkörper sind zusammengesetzt, in vertikaler Richtung können die beiden form- und/oder kraftschlüssig aneinander gehalten sein. Es ist insbesondere eine Klebeverbindung möglich (auch in Kombination mit einem Formschluss), womit zugleich eine gewisse Abdichtung geschaffen sein kann (z. B. gegen ein Eindringen von Betonmilch).

Im Allgemeinen ist auch denkbar, dass der Grundkörper selbst das Mantelrohr bzw. einen Abschnitt davon bildet, also mit einem schlauchartigen Fortsatz geformt ist. Bevorzugt sind der Grundkörper und das Mantelrohr jedoch zusammengesetzte Teile. Prinzipiell könnte das Mantelrohr auch im Vergusskörper selbst gehalten sein, bspw. formschlüssig (etwa verrastet) oder eingeklebt. Bevorzugt dient jedoch der Grundkörper der Relativfixierung, ist nämlich der Vergusskörper auf- und das Mantelrohr von unten angesetzt, insbesondere durch ein Bodenteil des Grundkörpers eingeschoben. Das Mantelrohr ist an dem Grundkörper bevorzugt formschlüssig gehalten (verrastet).

Bevorzugt bildet der Grundkörper einen nach oben offenen Hohlraum, weist er also ein Bodenteil und eine Seitenwand auf. Weiter bevorzugt erstreckt sich das Mantelrohr von unten in diesen Hohlraum hinein. Das obere Ende des Mantelrohres liegt dabei oberhalb des Bodenteils, bevorzugt jedoch unterhalb des oberen Endes der Seitenwand. Das Mantelrohr kann somit zuverlässig eingesteckt werden und ist gut zugänglich, muss jedoch andererseits selbst dann nicht abgelängt werden, wenn in Ausnahmefällen der gesamte Vergusskörper abgenommen wird. Die Seitenwand des Grundkörpers bildet bevorzugt einen Kragen, der den Vergusskörper nach außen hin einfasst. Bevorzugt ist die Seitenwand mit einer Stufe geformt, auf welcher der Vergusskörper aufsitzt. Der Kragen ist dann an dieser Stufe angeordnet, er fasst sie nach außen hin ein. Ein Innenvolumen (Hohlraum) der Durchführung wird dann in einem unteren Bereich allein von der Seitenwand und in einem oberen Bereich allein von dem Vergusskörper begrenzt, die Stufe markiert den Übergang. Im Allgemeinen könnte der Vergusskörper bspw. auch auf einem Bodenteil des Grundkörpers aufsitzen und damit die gesamte Seitenwand einen Kragen darstellen. Generell ist der Kragen hinsichtlich der Stabilität von Vorteil, hält er den Vergusskörper nämlich beim Positionieren der Durchführung und dann auch beim Vergießen in Position.

Generell wird ein Grundkörper mit Seitenwand in bevorzugter Ausgestaltung derart in eine Bodenplatte eingegossen, dass deren Oberkante am oberen Ende der Seitenwand liegt. Das obere Ende der Seitenwand soll vertikal um bspw. nicht mehr als 5 cm, 4 cm, 3 cm bzw. 2 cm gegenüber der Oberkante versetzt sein, besonders bevorzugt liegt das obere Ende im Rahmen technisch üblicher Genauigkeit auf Höhe der Oberkante, also bündig.

Bei einer bevorzugten Ausführungsform wird bzw. ist der Montageaufsatz in der Montageposition an dem Grundkörper verschraubt. Er kann insbesondere mit dem Verschrauben in die Montageposition gebracht werden, bevorzugt in Anlage an der Oberfläche des Bodenelements. In den Grundkörper kann bspw. ein Gewinde eingeschnitten oder ein entsprechendes Einlegeteil eingesetzt oder eingespritzt sein, etwa eine Gewindehülse bzw. Mutter. Insgesamt kann die Relativfixierung von Montageaufsatz und Grundkörper speziell hinsichtlich der Auszugssicherung von Vorteil sein.

Wie bereits erwähnt, weist die Durchführung in bevorzugter Ausgestaltung eine Aufstellvorrichtung auf, die dem Positionieren bzw. Ausrichten vor dem Vergießen dient. Die Aufstellvorrichtung kann bspw. einen Erdspieß bzw. Ständer umfassen, der in dem ausgehobenen Graben platziert wird. Daran sind das Mantelrohr und der Vergusskörper aufgehängt, vorzugsweise über ein weiteres, höhenverstellbar gelagertes Ständerteil.

Die Durchführung wird vor dem Eingießen auf der gewünschten Höhe platziert, und zwar anhand der Oberkante der Bodenplatte als Referenz. Vor dem Gießen der Bodenplatte ist deren Dicke bzw. Höhe und damit die Lage der Oberkante in der Regel bekannt, im Unterschied zur Dicke des später darauf erstellten Fußbodenaufbaus. Im Falle eines Grundkörpers mit Seitenwand (siehe vorne), wird deren oberes Ende bevorzugt auf Höhe der Oberkante der Bodenplatte platziert (bündig). Das Vergussmaterial der Bodenplatte umschließt dann den Grundkörper samt Seitenwand, nicht jedoch den Vergusskörper. Der Vergusskörper wird dann allein vom Estrich bzw. dem übrigen Fußbodenaufbau umschlossen, was eine geringere mechanische Belastung darstellen kann.

Bei einer bevorzugten Ausführungsform ist an dem Grundkörper der Durchführung ein Flansch vorgesehen, der nach dem Eingießen in die Bodenplatte bündig mit deren Oberkante liegt. Vor dem Eingießen kann der Flansch somit bspw. auch genutzt werden, um die Durchführung auf der passenden Höhe zu justieren. Der Flansch kann gegenüber dem Grundkörper bspw. um mindestens 2 cm, bevorzugt mindestens 3 cm bzw. 4 cm nach außen hervortretenden (mögliche Obergrenzen können bspw. bei höchstens 30 cm, 20 cm bzw. 15 cm liegen). Vor dem Erstellen des Fußbodenaufbaus wird an den Flansch bevorzugt eine Flächendichtung angearbeitet, also eine Flächendichtung auf der Bodenplatte. Bevorzugt handelt es sich hierbei um eine Dampfsperre, die bspw. in Form einer Folie auf der Bodenplatte ausgelegt wird. Diese Folie kann dann am Flansch befestigt werden, bevorzugt verklebt.

Bevorzugt weist die Durchführung eine Mehrzahl Mantelrohre auf, also mindestens 2, bevorzugt mindestens 3. Mögliche Obergrenzen liegen (davon unabhängig) bspw. bei höchstens 6 bzw. 5 Mantelrohren, besonders bevorzugt sind 4 Mantelrohre vorgesehen. Jeder Sparte ist dann ein eigenes Mantelrohr zugeordnet, wobei die Sparten Elektro/Daten auch zusammengelegt sein können. Die Mantelrohre werden bzw. sind in bevorzugter Ausgestaltung mit dem Grundkörper der Durchführung zusammengesetzt (siehe auch vorne). Der Grundkörper hält die Mantelrohre in einer Relativposition zueinander, diese können insbesondere von unten in sein Bodenteil eingeschoben sein.

In bevorzugter Ausgestaltung weist die Durchführung zusätzlich ein Halteteil auf, das unterhalb des Grundkörpers angeordnet ist und die Mantelrohre in einer Relativposition zueinander hält. Dies kann bspw. vor dem Gießen der Bodenplatte beim Einjustieren der Durchführung die Stabilität erhöhen. Die Aufstellvorrichtung (siehe vorne) kann dann bspw. an dem Halteteil und/oder dem Grundkörper befestigt sein, bevorzugt an beiden. Prinzipiell ist auch ein Halteteil aus Metall denkbar, etwa aus gebogenen Blechstreifen, in welches die Mantelrohre eingeclipst werden können. Bevorzugt ist das Halteteil jedoch aus einem Kunststoffmaterial vorgesehen. Auch vom Material unabhängig hat es bevorzugt eine Plattenform (flächige Erstreckung in horizontaler Richtung), die Platte wird von Durchgangslöchern für die Mantelrohre durchsetzt. Die Mantelrohre können in die Platte eingeschoben werden, diese kann jedoch auch geteilt ausgeführt sein und um die Mantelrohre zusammengesetzt werden.

In bevorzugter Ausgestaltung ist das Halteteil gegen die Mantelrohre gedichtet, bspw. mit auf die Mantelrohre aufgeschobenen Dichtringen oder einer an das Halteteil angespritzten Dichtung. Das Halteteil kann dann vorteilhafterweise zugleich als Wassersperrflansch dienen.

In bevorzugter Ausgestaltung wird die Durchführung mit Halteteil so einjustiert, dass das Halteteil vor dem Gießen der Bodenplatte auf einer Schüttung aufsitzt. Auf der Schüttung bzw. Sauberkeitsschicht, also unterhalb der anschließend gegossenen Bodenplatte, wird dann bevorzugt eine Flächendichtung ausgebracht und an das Halteteil angearbeitet. Als Flächendichtung ist eine Kunststofffolie bevorzugt, die weiter bevorzugt mit einem Metallzusatz versehen ist, etwa mit Aluminium. Diese Anordnung kann eine Radondichtung darstellen (Radongas könnte aufgrund des Kamineffekts aus dem Erdreich durch das Gebäude gesaugt werden), wobei das Anarbeiten an das Halteteil im Bereich um die Mantelrohre einen zuverlässigen Anschluss sicherstellt. Speziell bei einer größeren Zahl Mantelrohre vereinfacht das Halteteil das Anarbeiten erheblich. Das Halteteil ist hierfür bevorzugt als Platte ausgeführt, besonders bevorzugt weist es einen nach außen hervortretenden Flansch auf.

In bevorzugter Ausgestaltung der Durchführung mit mehreren Mantelrohren ist der Vergusskörper im Inneren mit einer Verstrebung vorgesehen. Diese stabilisiert einander seitlich entgegengesetzte Außenwandbereiche des Vergusskörpers. Dabei lässt die Verstrebung jedoch Durchtritte frei, die vertikal mit den Mantelrohren fluchten. Wird der Montageaufsatz mit Rohrstutzen platziert, muss dann also nicht zunächst noch die Verstrebung in dem unteren Abschnitt des Vergusskörpers entfernt werden.

Wie bereits erwähnt, wird die Durchführung bevorzugt in ein Bodenelement eingebaut, das eine Bodenplatte und einen Fußbodenaufbau umfasst. Die Bodenplatte wird auf dem Erdreich gegossen, in der Regel auf einer speziellen Unterfütterung bzw. Schüttung, insbesondere auf einer Sauberkeitsschicht. Bevorzugt ist Beton als Vergussmaterial. Auf der Bodenplatte, die den Rohfußboden festlegt und funktional das Fundament des Gebäudes bildet, wird dann der Fußbodenaufbau errichtet. Letzterer kann insbesondere eine Estrichschicht umfassen, optional sind weitere Schichten, wie Wärmedämmung und/oder Fußbodenheizung, typischerweise bildet ein Fußbodenbelag den oberen Abschluss (zum Beispiel Fliesen etc.). Die Durchführung wird jedenfalls in die Bodenplatte und üblicherweise in eine Estrichschicht eingegossen, die übrigen Schichten sind in der Regel keine Vergussschichten. Sofern von einem Eingießen in das Bodenelement die Rede ist, meint dies ein Eingießen in zumindest eine Schicht davon (die Bodenplatte).

Offenbart sein soll auch ein Verfahren zum Montieren einer Durchführung, das sich mit den Merkmalen der Verwendung gemäß Anspruch 1 ergibt, vorzugsweise in Kombination mit einem bzw. mehreren der abhängigen Ansprüche. Gleichermaßen soll ein Verfahren zum Herstellen eines Bodenelements mit Bodenplatte und Fußbodenaufbau darauf offenbart sein, das sich mit den Merkmalen der Verwendung gemäß Anspruch 1 ergibt, vorzugsweise in Kombination mit einem oder mehreren der abhängigen Ansprüche.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Durchführung zum Eingießen in einer Schrägansicht von unten;
- Figur 2: die Durchführung gemäß Figur 1 in einer Seitenansicht in einer Einbausituation;
- Figur 3: die Anpassung des Vergusskörpers der Durchführung an die Höhe des Fußbodenaufbaus in schematischer Darstellung;
- Figur 4: den Grundkörper ohne Vergusskörper in einer Schrägansicht von oben;
- Figur 5: einen nachträglich von oben angesetzten Montageaufsatz mit Rohrstutzen in einer Seitenansicht;
- Figur 6: den Vergusskörper ohne Grundkörper in einer Schrägansicht von unten.

### Bevorzugte Ausführung der Erfindung

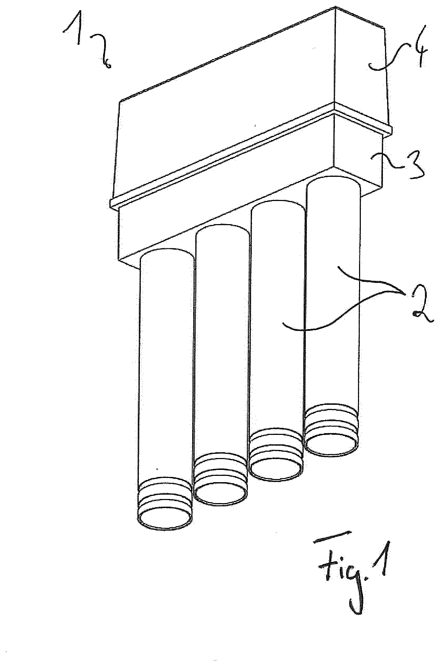

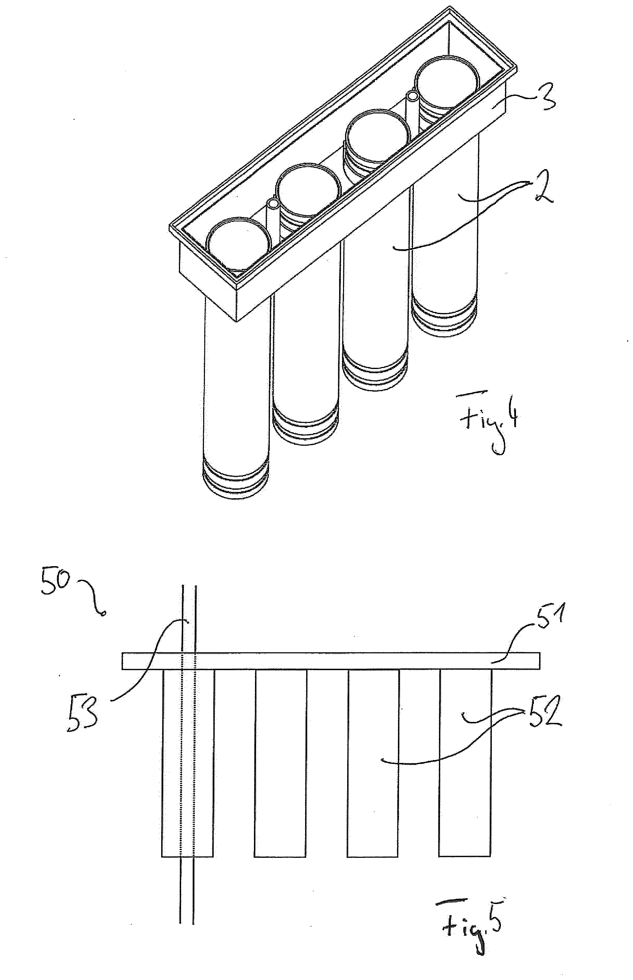

Figur 1 zeigt eine Durchführung 1 in einer Schrägansicht von unten. Die Durchführung 1 weist vier Mantelrohre 2 auf, die von unten in einen Grundkörper 3 eingeschoben sind. Die oberen Enden der Mantelrohre 2 liegen vertikal innerhalb des Grundkörpers 3, vergleiche auch Figur 4 zur Illustration. Unterhalb des Grundköpers 3 sind außenseitig auf dem Mantelrohr 2 hier nicht dargestellte Mehrstegdichtungen angeordnet. Auf dem Grundkörper 3 ist ein Vergusskörper 4 angeordnet, der aus expandiertem Polypropylen geformt ist. Der Vergusskörper 4 ist kastenförmig aufgebaut, er weist vier Seitenwände und einen integral damit geformten Deckel auf, wobei in Figur 1 nur zwei Seitenwände zu sehen sind.

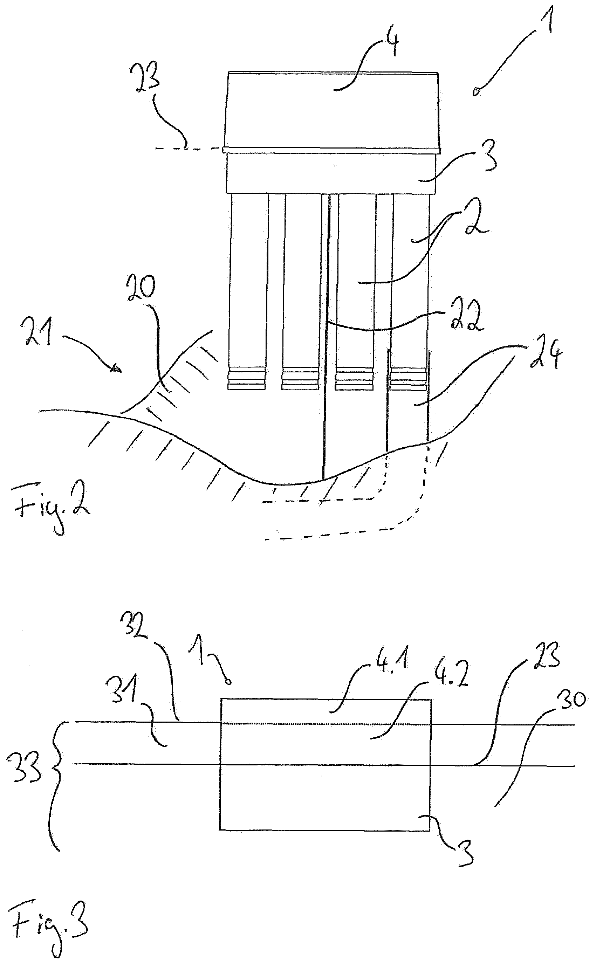

Figur 2 zeigt die Durchführung 1 in einer Einbausituation, im Erdreich 20 wurde ein Graben 21 ausgehoben. Oberhalb davon soll dann später die Bodenplatte gegossen und das Gebäude errichtet werden. Die Durchführung 1 wird mit einer Aufstellvorrichtung 22, vorliegend einem höhenverstellbaren Erdspieß, auf einer solchen Höhe eingerichtet, dass das obere Ende des Grundkörpers 3 mit der Oberkante 23 der später gegossenen Bodenplatte zusammenfällt. An die Mantelrohre 2 wird jeweils ein Schutzrohr 24 angeschlossen (eines davon ist skizziert), die

Schutzrohre 24 verlaufen in dem Graben 21 bis zu einer Anschlussstelle an der Straße.

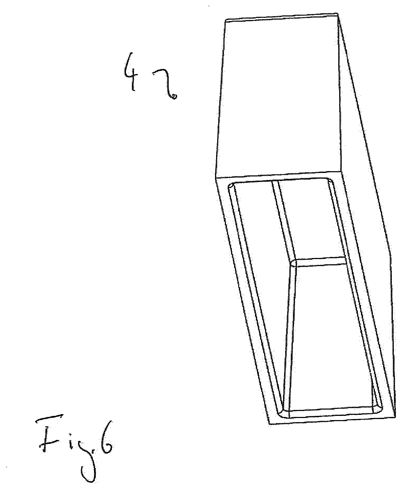

Nach einem Verfüllen des Grabens 21 wird die Bodenplatte 30 betoniert, vergleiche Figur 3. Auf der Bodenplatte 30, von deren Oberkante 23 aufwärts, wird ein Fußbodenaufbau 31 (Estrich etc.) aufgebracht. Dessen Oberkante 32 ist die Oberkante des Bodenelements 23 (das sich aus Bodenplatte 30 und Fußbodenaufbau 31 zusammensetzt). Der Grundkörper 3 sitzt in der Bodenplatte 31, der Vergusskörper 4 in dem Fußbodenaufbau 31, ein oberer Abschnitt 4.1 steht jedoch über (nur der untere Abschnitt 4.2 wird seitlich von dem Fußbodenaufbau 31 umschlossen). Im Zuge der weiteren Montage wird der obere Abschnitt 4.1 abgetrennt, bspw. mit einem Messer. Damit wird das Innere des Grundkörpers 3 zugänglich (von dem Vergusskörper 4 bleibt nur eine umlaufende Seitenwand stehen, vergleiche auch Figur 6 zur Illustration.

Figur 4 zeigt die Durchführung in einer Ansicht von schräg oben, und zwar ohne den Vergusskörper. Die Mantelrohre 2 sind von unten in den Grundkörper 3 eingesteckt, mit dem Entfernen des oberen Abschnitts 4.1 des Vergusskörpers 4 sind sie von oben zugänglich. Von oben wird dann der in Figur 5 gezeigte Montageaufsatz 50 eingeschoben. Dieser weist eine Flanschplatte 51 auf, an der sich nach unten erstreckende Rohrstutzen 52 angeordnet sind. Jeder der Rohrstutzen 52 wird in ein jeweiliges Mantelrohr 2 eingeschoben und ist mit einer hier nicht dargestellten Dichtung dagegen gedichtet. Die Montageplatte 51 sitzt auf der Oberkante 32 des Fußbodenaufbaus 31 auf.

Durch jedes der insgesamt vier Rohrsysteme (aus Mantelrohr, Rohrstutzen und Schutzrohr) kann dann die eigentliche Leitung 53 verlegt und gegen den Montageaufsatz 50 gedichtet werden.

Figur 6 zeigt allein den Vergusskörper 4 in einer Ansicht von unten, es ist also die Unterseite des Deckels und sind ferner 2 Seitenwände von innen zu erkennen. In einer hier nicht dargestellten Variante können zwischen den lang gestreckten Seitenwänden auch Stege verlaufen und eine Verstrebung zur Stabilisierung der Seitenwände bilden.

## Patentansprüche

1. Verwendung einer Durchführung (1) zum Eingießen in ein Bodenelement (33) und Hindurchführen einer Leitung (53),
welche Durchführung (1) ein Mantelrohr (2) und einen Vergusskörper (4) aufweist,
die solchermaßen in das Bodenelement (33) eingegossen werden, dass sich das Mantelrohr (2) unterhalb des Vergusskörpers (4) erstreckt und ein oberer Abschnitt (4.1) des Vergusskörpers (4) gegenüber einer Oberkante (32) des Bodenelements (33) übersteht,
wobei nach dem Eingießen der obere Abschnitt (4.1) des Vergusskörpers (4) entfernt und ein Montageaufsatz (50) mit einem Rohrstutzen (52) in einer Montageposition relativ zu dem Mantelrohr (2) positioniert wird,
**dadurch gekennzeichnet dass**
der Vergusskörper (4) aus einem geschäumten Kunststoffmaterial vorgesehen ist.

2. Verwendung nach Anspruch 1, bei welcher das geschäumte Kunststoffmaterial des Vergusskörpers (4) expandiertes Polypropylen ist.

3. Verwendung nach Anspruch 1 oder 2, bei welcher der Vergusskörper (4), bevor der obere Abschnitt (4.1) davon entfernt wird, das Mantelrohr (2) nach oben hin abdeckt.

4. Verwendung nach einem der vorstehenden Ansprüche, bei welcher der Montageaufsatz (50) erst an die Durchführung (1) angesetzt wird, nachdem das Mantelrohr (2) und der Vergusskörper (4) eingegossen wurden.

5. Verwendung nach einem der vorstehenden Ansprüche, bei welcher die Durchführung (1) einen Grundkörper (3) aufweist, auf den der Vergusskörper (4) aufgesetzt ist, wobei eine Seitenwand des Grundkörpers (3) einen Kragen bildet, welcher den Vergusskörper (4) nach außen hin einfasst.

6. Verwendung nach einem der vorstehenden Ansprüche, bei welcher die Durchführung (1) einen Grundkörper (3) mit einer Seitenwand aufweist, wobei die Durchführung (1) auf einer solchen Höhe in eine Bodenplatte (30) des Bodenelements (33) eingegossen wird, dass eine Oberkante (32) der Bodenplatte (30) am oberen Ende der Seitenwand liegt.

7. Verwendung nach einem der vorstehenden Ansprüche, bei welcher die Durchführung (1) einen Grundkörper (3) aufweist, wobei der Montageaufsatz (50) in der Montageposition an dem Grundkörper (3) befestigt ist.

8. Verwendung nach einem der vorstehenden Ansprüche, bei welcher die Durchführung (1) einen Grundkörper (3) und eine Aufstellvorrichtung (22) aufweist, mit welcher die Durchführung (1) vor dem Gießen des Bodenelements (33) relativ zum Erdreich (20) platziert wird, wobei die Aufstellvorrichtung (22) an dem Grundkörper (3) befestigt ist.

9. Verwendung nach einem der vorstehenden Ansprüche, bei welcher die Durchführung einen Grundkörper (3) aufweist, wobei an dem Grundkörper (3) ein Flansch vorgesehen ist, wobei die Durchführung (1) auf einer solchen Höhe in eine Bodenplatte (30) des Bodenelements (33) eingegossen wird, dass der Flansch bündig mit einer Oberkante (32) der Bodenplatte (30) liegt, wobei vor einem Erstellen eines Fußbodenaufbaus (31) eine Flächendichtung auf der Bodenplatte (30) an den Flansch angearbeitet wird.

10. Verwendung nach einem der vorstehenden Ansprüche, bei welcher die Durchführung (1) einen Grundkörper (3) und eine Mehrzahl Mantelrohre (2) aufweist, die mit dem Grundkörper (3) zusammengesetzt sind und von diesem in einer Relativposition zueinander gehalten werden.

11. Verwendung nach Anspruch 10, bei welcher die Durchführung (1) zusätzlich ein Halteteil (6) aufweist, das unterhalb des Grundkörpers (3) angeordnet ist und die Mantelrohre (2) in einer Relativposition zueinander hält.

12. Verwendung nach Anspruch 11, bei welcher das Halteteil (6) zu den Mantelrohren (2) gedichtet ist.

13. Verwendung nach einem der vorstehenden Ansprüche, bei welcher die Durchführung (1) eine Mehrzahl Mantelrohre (2) aufweist und der Vergusskörper (4) in seinem Inneren mit einer Verstrebung geformt ist, die einander entgegengesetzte Außenwandbereiche des Vergusskörpers (4) relativ zueinander stabilisiert, dabei aber Durchtritte in dem Vergusskörper (4) freilässt, die vertikal mit den Mantelrohren (2) fluchten.

14. Verwendung nach einem der vorstehenden Ansprüche, bei welcher das Bodenelement (33) eine Bodenplatte (30) und einen Fußbodenaufbau (31) umfasst, wobei eine Oberkante (32) des Fußbodenaufbaus (31) die Oberkante (32) des Bodenelements (33) bildet.

## Claims

1. Use of a lead-through (1) for molding into a floor element (33) and leading through a line (53),
which lead-through (1) has a jacket tube (2) and a molding body (4),
which are molded into the floor element (33) in such a way that the jacket tube (2) extends below the molding body (4) and an upper portion (4.1) of the molding body (4) projects beyond an upper edge (32) of the floor element (33),
wherein, after the molding, the upper portion (4.1) of the molding body (4) is removed and a mounting attachment (50) with a pipe socket (52) is positioned in a mounting position relative to the jacket tube (2),
**characterized in that**
the molding body (4) is provided from a foamed plastic material.

2. Use according to claim 1, in which the foamed plastic material of the molding body (4) is expanded polypropylene.

3. Use according to claim 1 or 2, in which the molding body (4), before the upper portion (4.1) is removed therefrom, covers the jacket tube (2) towards the top.

4. Use according to any one of the preceding claims, in which the mounting attachment (50) is placed against the lead-through (1) only after the jacket tube (2) and the molding body (4) have been molded.

5. Use according to any one of the preceding claims, in which the lead-through (1) has a base body (3) onto which the molding body (4) is placed, wherein a side wall of the base body (3) forms a collar which surrounds the molding body (4) towards the outside.

6. Use according to any one of the preceding claims, in which the lead-through (1) has a base body (3) with a side wall, wherein the lead-through (1) is molded into a floor plate (30) of the floor element (33) at such a height that an upper edge (32) of the floor plate (30) lies at the upper end of the side wall.

7. Use according to any one of the preceding claims, in which the lead-through (1) has a base body (3), wherein the mounting attachment (50) is fastened to the base body (3) in the mounting position.

8. Use according to any one of the preceding claims, in which the lead-through (1) has a base body (3) and a raising device (22) with which the lead-through (1) is placed relative to the ground (20) before the molding of the floor element (33), wherein the raising device (22) is fastened to the base body (3).

9. Use according to any one of the preceding claims, in which the lead-through has a base body (3), wherein a flange is provided on the base body (3), wherein the lead-through (1) is molded into a floor plate (30) of the floor element (33) at such a height that the flange lies flush with an upper edge (32) of the floor plate (30), wherein, before a floor structure (31) is created, a surface seal is worked onto the flange on the floor plate (30).

10. Use according to any one of the preceding claims, in which the lead-through (1) has a base body (3) and a plurality of jacket tubes (2) which are assembled with the base body (3) and are held by the latter in a position relative to one another.

11. Use according to claim 10, in which the lead-through (1) additionally has a holding part (6) which is arranged below the base body (3) and holds the jacket tubes (2) in a position relative to one another.

12. Use according to claim 11, in which the holding part (6) is sealed with respect to the jacket tubes (2).

13. Use according to any one of the preceding claims, in which the lead-through (1) has a plurality of jacket tubes (2) and the molding body (4) is formed in its interior with a strut which stabilizes mutually opposite outer wall regions of the molding body (4) relative to one another, but in the process leaves free passages in the molding body (4) which are aligned vertically with the jacket tubes (2).

14. Use according to any one of the preceding claims, in which the floor element (33) comprises a floor plate (30) and a floor structure (31), wherein an upper edge (32) of the floor structure (31) forms the upper edge (32) of the floor element (33).

## Revendications

1. Utilisation d'une traversée (1) à couler dans un élément de sol (33) et destinée au passage d'une conduite (53),
laquelle traversée (1) présente une enveloppe tubulaire (2) et un corps à sceller (4),
lesquels sont coulés dans l'élément de sol (33) de telle façon que l'enveloppe tubulaire (2) s'étend en dessous du corps à sceller (4) et qu'une partie supérieure (4.1) du corps à sceller (4) dépasse par rapport à un bord supérieur (32) de l'élément de sol (33),
la partie supérieure (4.1) du corps à sceller (4) étant retirée après la coulée et un insert de montage (50) doté d'une tubulure (52) étant positionné dans une position de montage par rapport à l'enveloppe tubulaire (2) ;
**caractérisée en ce que**
le corps à sceller (4) est réalisé dans un matériau plastique expansé.

2. Utilisation selon la revendication 1, dans laquelle le matériau plastique expansé du corps à sceller (4) est du polypropylène expansé.

3. Utilisation selon la revendication 1 ou 2, dans laquelle le corps à sceller (4), avant que la partie supérieure (4.1) de celui-ci ne soit retirée, recouvre l'enveloppe tubulaire (2) sur le haut.

4. Utilisation selon l'une des revendications précédentes, dans laquelle l'insert de montage (50) n'est placé sur la traversée (1) qu'après que l'enveloppe tubulaire (2) et le corps à sceller (4) ont été coulés.

5. Utilisation selon l'une des revendications précédentes, dans laquelle la traversée (1) présente un corps de base (3) sur lequel est posé le corps à sceller (4) ; une paroi latérale du corps de base (3) formant une collerette qui entoure extérieurement le corps à sceller (4).

6. Utilisation selon l'une des revendications précédentes, dans laquelle la traversée (1) présente un corps de base (3) doté d'une paroi latérale ; la traversée (1) étant coulée dans une dalle de sol (30) de l'élément de sol (33) à une hauteur telle qu'un bord supérieur (32) de la dalle de sol (30) se trouve à l'extrémité supérieure de la paroi latérale.

7. Utilisation selon l'une des revendications précédentes, dans laquelle la traversée (1) présente un corps de base (3) ; l'insert de montage (50), en position de montage, étant fixé au corps de base (3).

8. Utilisation selon l'une des revendications précédentes, dans laquelle la traversée (1) présente un corps de base (3) et un dispositif d'installation (22) permettant de placer la traversée (1) par rapport au sol (20) avant de couler l'élément de sol (33) ; le dispositif d'installation (22) étant fixé au corps de base (3).

9. Utilisation selon l'une des revendications précédentes, dans laquelle la traversée présente un corps de base (3) ; une bride étant prévue sur le corps de base (3), la traversée (1) étant coulée dans une dalle de sol (30) de l'élément de sol (33) à une hauteur telle que la bride se trouve à fleur d'un bord supérieur (32) de la dalle de sol (30) ; un joint d'étanchéité de surface étant assuré sur la dalle de sol (30) au niveau de la bride avant la réalisation d'une structure de plancher (31).

10. Utilisation selon l'une des revendications précédentes, dans laquelle la traversée (1) présente un corps de base (3) et une pluralité d'enveloppes tubulaires (2) assemblées au corps de base (3) et maintenues par ce dernier dans une position relative les unes par rapport aux autres.

11. Utilisation selon la revendication 10, dans laquelle la traversée (1) présente en outre une pièce de maintien (6) qui est disposée en dessous du corps de base (3) et qui maintient les enveloppes tubulaires (2) dans une position relative les unes par rapport aux autres.

12. Utilisation selon la revendication 11, dans laquelle la pièce de maintien (6) est étanche vis-à-vis des enveloppes tubulaires (2).

13. Utilisation selon l'une des revendications précédentes, dans laquelle la traversée (1) présente une pluralité d'enveloppes tubulaires (2) et le corps à sceller (4) est pourvu, en son intérieur, d'une entretoise qui stabilise les unes par rapport aux autres les zones de paroi extérieure du corps à sceller (4) qui sont opposées les unes aux autres, tout en laissant des passages libres dans le corps à sceller (4) qui sont alignés verticalement avec les enveloppes tubulaires (2).

14. Utilisation selon l'une des revendications précédentes, dans laquelle l'élément de plancher (33) comprend une dalle de sol (30) et une structure de plancher (31) ; un bord supérieur (32) de la structure de plancher (31) formant le bord supérieur (32) de l'élément de plancher (33).
